Europäisches Patentamt

(19) European Patent Office

Office européen des brevets

(11) Publication number: **0 102 933**
**A1**

## EUROPEAN PATENT APPLICATION

(21) Application number: 83850225.0

(22) Date of filing: 26.08.83

(51) Int. Cl.³: **B 60 P 7/08**
**D 07 B 1/22**

(30) Priority: 31.08.82 SE 8204961

(43) Date of publication of application:
14.03.84 Bulletin 84/11

(84) Designated Contracting States: –
AT BE CH DE FR GB IT LI NL

(71) Applicant: Industri AB Thule
Box 69
S-330 33 Hillerstorp(SE)

(72) Inventor: Thulin, Willis
Vallgatan 18
S-330 33 Hillerstorp(SE)

(74) Representative: Linde, Leif
Vernamo Patentbyrä AB P.O. Box 1
S-270 11 Abbekas(SE)

(54) A strap for securing objects.

(57) The invention related to a strap for securing objects to for instance a load carrier for vehicles. According to the invention, the strap consists of elastomeric material (2) with a plurality of wires (4) of reinforcing material, such as metal, embedded therein.

Fig.1.

EP 0 102 933 A1

1

This invention relates to a strap for securing objects to for instance a load carrier for vehicles.

Load carriers of the kind adapted to be clamped to the drip mouldings of vehicle roofs with a view to carrying different kinds of bulky objects thereon, have found an ever increasing employment. The load carriers may be for instance luggage carriers, ski racks, surfboard racks, canoe racks, etc. In this connection it is previously known to try and prevent theft of the load carriers and/or the objects carried thereby by means of various kinds of locking devices. However, to prevent or at least make it more difficult to steal such objects carried by the load carriers as are retained by means of straps and the like, it is necessary not only to connect the strap ends with the load carrier by means of some kind of locking device, but also to design the strap proper in such a way that it cannot be severed or cut off by means of conventional scissors or knives, and so a theft by cutting of the strap cannot be committed upon the spur of the moment, but will necessitate planning and time-consuming measures. Another contrasting requirement is that the strap shall be flexible so as to conform closely to the shapes of the different objects to be retained, and to permit being wound onto take-up reels or the like for adaption of the length of the strap according to need.

Accordingly, the purpose of the present invention is to provide a strap for securing objects, which meets the above-mentioned requirements and wishes.

To realise this the strap according to the invention consists of elastomeric material with a plurality of wires of reinforcing material, such as metal, embedded therein.

In a preferred embodiment of the strap according to the invention each of the wires of reinforcing material comprises a plurality of thin wires.

In this case it may be suitable that the wires of reinforcing material are designed in principally the same way as wire ropes, thus being made from thin wires which are first twisted together into strands which in turn are twisted together to form the final reinforcing wires, these being thus separately embedded in the elastomeric material of the strap so as to extend in parallel in the longitudinal direction of the strap.

A strap according to the invention is flexible and easy-to-handle and also resistant, in a surprising degree, to being cut with the aid of conventional tools. As the strap is of elastomeric material there is also produced a friction against the object or objects to be retained by the strap, which contributes to the retention of the object or objects. The invention will now be described more in detail below with reference to the accompanying drawing, in which:

Fig. 1 is a respective view of a length of securing strap according to the invention;

Fig. 2 is a cross section on an enlarged scale of a first embodiment of a strap according to the invention; and

Fig. 3 is a cross section, likewise on an enlarged scale, of a second embodiment of a strap according to the invention.

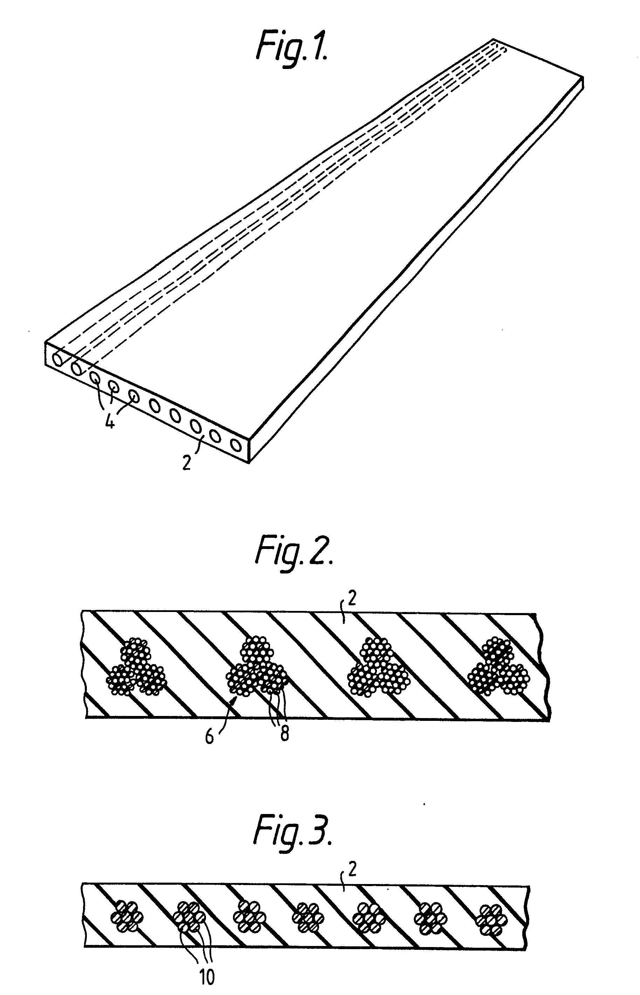

A perspective view of a length of a strap according to the invention is shown in Fig. 1. The strap is intended to be used, for instance in load carriers for vehicles, for securing various objects, such as surfboards, canoes, building material, suitcases etc. Considering the purpose for which it is to be used, the strap must be strong in order not only safely to retain the objects to the load carrier, but also to prevent or make it more difficult to steal the objects retained to the load carrier. Therefore, the strap must be capable of withstanding being cut with the aid of simple tools, such as scissors, knives and the like. Moreover, the strap must be flexible to conform to the objects secured and to permit being wound onto reels and the like which permit fixation of the ends of the strap and winding it up for adaptation of the length thereof according to need.

A strap designed in conformity with the accompanying drawing fulfills this requirement in that it consists of an elastomeric material, preferably vulcanized rubber, designated 2 in the drawing, and of wires 4 of metal embedded in the elastomeric material. The wires are wholly enclosed by the elastomeric material and so arranged as to extend in parallel in the longi-

3

tudinal direction of the strap. The strap manufactured by shaping non-vulcanized rubber around the metal wires, and then causing the strap to vulcanize in a manner conventional in elastomer technics.

To impart optimum flexibility and strength to the wires 4 each wire 4 is made from a plurality of fine wires. Two different ways of making the wires 4 are shown in Figs. 2 and 3.

In accordance with Fig. 2, each of the wires 4 consists of a number of thin wires 6 which have first been twisted together into three strands 8 which in turn have been twisted together to form the wire 4.

In accordance with Fig. 3, each of the wires 4 is made from a number of thin, twisted-together wires 10.

The invention may be modified within the scope of the appendant claims. Thus, a wire other than metal wire and a wire made in a manner other than that illustrated in the embodiments shown in Figs. 2 and 3, can be used as reinforcing wire. Further, it is not necessary for the elastomeric material to be rubber but said material may instead be some suitable plastic material.

0102933

C L A I M S

1. A strap for securing objects to for instance a load carrier for vehicles, c h a r a c t e r i z e d in that the strap consists of elastomeric material (2) with a plurality of wires (4) of reinforcing material, such as metal, embedded therein.

2. A strap as claimed in claim 1, c h a r a c t e r i z e d in that each of the wires (4) of reinforcing material consists of a plurality of thin wires (6; 10).

3. A strap as claimed in claim 2, c h a r.a c t e r i z e d in that the thin wires (6; 10) are twisted together.

4. A strap as claimed in claim 3, c h a r a c t e r i z e d in that the wires (4) are formed by thin wires which are twisted together into strands (8) which in turn are twisted together to form the wires.

5. A strap as claimed in any of the preceding claims, c h a r a c t e r i z e d in that the elastomeric material (2) is rubber.

0102933

1/1

*Fig.1.*

*Fig.2.*

*Fig.3.*

# EUROPEAN SEARCH REPORT

European Patent Office

EP  83 85 0225

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 563 113  (HINDIN et al.) <br> * Column  4, lines 36-41, 61-75; figures 2,3 * | 1-5 | B 60 P    7/08 <br> D 07 B    1/22 |
| X | FR-A-1 239 298  (SOCIETE BOURBONNAISE) <br> * Summary; figures 1-4 * | 1-3,5 | |
| | | | **TECHNICAL FIELDS SEARCHED (Int. Cl. 3)** <br><br> B 60 P    7/00 <br> D 07 B    1/00 |

The present search report has been drawn up for all claims

| Place of search <br> THE HAGUE | Date of completion of the search <br> 05-12-1983 | Examiner <br> OSBORNE  J. |
|---|---|---|